# EUROPEAN PATENT APPLICATION

(11) **EP 0 701 077 A1**
(43) Date of publication of application: **13.03.1996**
(21) Application number: 95113534.2
(22) Date of filing: 29.08.1995
(51) Int. Cl.: F16K 31/60, F16K 11/078

(54) **Single-control mixing cartridge for hot and cold water with temperature limiting device**

(30) Priority: 12.09.1994 IT MN940012
(71) Applicant: AMFAG S.r.l., I-46042 Castelgoffredo (Mantova) (IT)
(72) Inventor: Bosio, Orlando, I-46040 Casaloldo (Prov. of Mantova) (IT)
(74) Representative: Modiano, Guido, Dr.-Ing.

(57) **Abstract**

A single-control mixing cartridge for hot and cold water with a temperature limiting device, comprising a ring (3) connectable in an adjustable position to the cylindrical body portion provided with a first projection (5) adapted to abut against a tooth (6) which protrudes from the rotatable fitting coming out from the cylindrical body portion, and with a second projection (8) adapted, at the same time, to abut against a surface (9) of said rotatable fitting formed in the cylindrical body portion.

## Description

The present invention refers to a single-control mixing cartridge for hot and cold water with a temperature limiting device.

Devices known as mixing cartridges, which are inserted within the taps and allow by moving a single lever to vary both the flow rate and the temperature of the delivered water, are widespread.

These devices comprise a body, which is provided with a bottom having separate inlet ports for hot and cold water and an outlet port for hot, cold or mixed water, and which contains a small fixed plate adjacent to said bottom and a small mobile plate provided with a cover plate, so as to define a mixing chamber, and adapted to assume different positions with respect to the small fixed plate, said cover plate being connected to an actuating lever fulcrum supported on a rotatable fitting within a cylindrical portion which monolithically protrudes from said body.

The described cartridges can be provided with a device for limiting the temperature of the delivered water, said device comprising in its most currently known form a ring, which can be connected in an adjustable position with the cylindrical cartridge body portion, and being provided with an abutment adapted to come into contact with a tooth which is integral with the rotatable fitting protruding from said cylindrical portion, so as to reduce the possibility of rotation of the fitting.

The material from which the rotatable fitting and the tooth monolithically protruding therefrom are made, has high smoothness characteristics but unfortunately poor resistance, and thus the device has a scarce reliability, in particular when little space is available and the tooth is of very reduced dimensions being so prone to a high danger of breaking.

The object of the present invention is to provide a single-control mixing cartridge for hot and cold water with a temperature limiting device being highly reliable in use.

The intended object is achieved by a single-control mixing cartridge for hot and cold water with a temperature limiting device according to the invention, including a body which is provided with a bottom having separate inlet ports for hot and cold water and an outlet port for hot, cold and mixed water, and which contains a small fixed plate adjacent to said bottom and a small mobile plate provided with a cover plate, so as to define a mixing chamber and adapted to take different positions with respect to the small fixed plate, said cover plate being connected to an actuating lever fulcrum supported on a rotatable fitting in a cylindrical portion which monolithically protrudes from said body, characterized in that it comprises a ring for limiting the maximum temperature of the delivered water connectable in a changeable position with said cylindrical cartridge body portion, said ring being provided with a first projection, adapted to abut against a tooth which monolithically protrudes from the rotatable fitting coming out from the cylindrical cartridge body portion, and with a second projection, being at the same time adapted to abut against a surface of said rotatable fitting formed in said cylindrical portion.

Further characteristics and advantages will further become apparent from the description of a mixing cartridge illustrated only by way of non-limitative example in the accompanying drawings, in which:
- figure 1 shows the cartridge with the separate ring and having the rotatable fitting in the position which determines the outflow of water at the maximum temperature, without limitation;
- figure 2 shows a top view of the cartridge with the ring assembled, in order to determine a limitation of the temperature of the outflowing water.

With reference to the aforesaid figures, the reference numeral 1 designates the body of the cartridge which monolithically comprises the cylindrical portion 1a.

In a known manner said body is provided with a bottom having separate ports for the inlet of hot and cold water and with a port for the outlet of hot, cold and mixed water, and contains, still in a known manner, a small fixed plate adjacent to said bottom and a small mobile plate provided with a cover plate, in order to define a mixing chamber and adapted to take different positions with respect to the small fixed plate, said cover plate being connected to an actuating lever 2 fulcrum supported on a rotatable fitting included in the cylindrical portion 1a.

By moving the lever 2 around its fulcrum one obtains that the small mobile plate carries out movements with respect to the small fixed plate, which notoriously determine flow rate variations of the water delivered from the tap, in which the cartridge is inserted, from zero to a maximum.

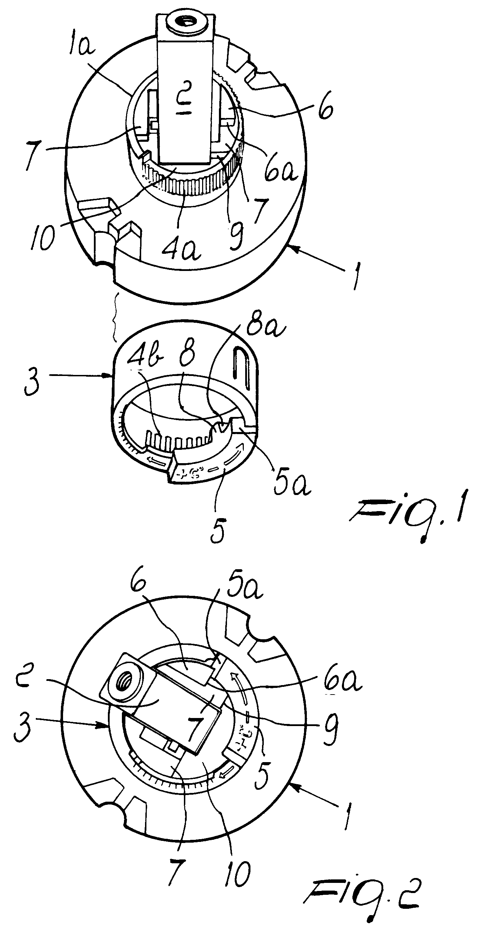

By moving the rotatable fitting comprised in the cylindrical portion 1a between two extreme positions, temperature variations of the water delivered from the tap are obtained, from the minimum temperature corresponding to the cold water inlet temperature, to the maximum temperature corresponding to the hot water inlet temperature; the cartridge having the rotatable fitting rotated in the extreme position, which determines the outflow of water at the maximum temperature, is shown in figure 1.

If it is desired that the temperature of the water coming out from the cartridge do not reach the maximum value referred to above, it is necessary to limit the rotation stroke of the rotatable fitting, in order to prevent it from reaching the position shown in figure 1 by making it stop before, that is after a smaller rotation angle, and the temperature limiting device, which now will be described in detail, is provided for this purpose.

Said device comprises the ring 3, which is connectable with the cylindrical portion 1a in an adjustable position maintained due to the contact of the knurled surfaces 4a, 4b, and said ring is provided with a first projection 5, forming with the surface 5a an element in abutment with the tooth 6, and more precisely with the surface 6a of the same, which monolithically protrudes from the rotatable fitting coming out from the cylindrical cartridge body portion 1a, as clearly appears if one considers that the plane surface 7 of the rotatable fitting from which the tooth protrudes is substantially situated at the same level as the upper edge of said cylindrical portion 1a.

Furthermore, the ring 3 is provided with a second projection 8, which forms with the surface 8a an element in abutment, at the same time with the contact between the afore-mentioned surfaces 6a and 5a, with the surface 9 formed on the rotatable fitting within the cylindrical portion 1a; said surface 9, in fact, substantially forms a step between the surface 7, which, as said, is situated at the level of the upper cylindrical portion edge 1a, and the surface 10, which is at a lower level with respect to said edge.

The ring 3 is usually provided already connected to the cylindrical portion 1a so as not to prevent the rotatable fitting from rotating up to the position shown in figure 1 and, hence, so as not to exert any limitation of the water outlet temperature.

By then connecting said ring in positions which are gradually more and more rotated in a counterclockwise direction, thus following the indications impressed on the ring itself, an always increasing limitation is achieved in the stroke of the rotatable fitting, which encounters a block in the abutments of the tooth 6 on the projection 5 and of the surface 9 on the projection 8, so as not to reach the position shown in figure 1, but having to stop before: it is the case e.g. of the limitation achieved by connecting the ring 3 to the cylindrical portion 1a as shown in figure 2, in which the stroke loss undergone by the rotating fitting due to the presence of the blockings exerted by said ring is obvious.

It is important to point out the maximum reliability of functioning offered by the temperature limiting device according to the invention: the provision of two abutment elements on the rotating fitting allows in fact to subdivide the blocking stress, in order to be able to operate without any problem also with cartridges in which the reduced dimensions entail a certain miniaturization of the single elements.

While putting the invention into practice all the particulars can be replaced with other technically equivalent elements; furthermore the materials employed as well as the shapes and dimensions can be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A single-control mixing cartridge for hot and cold water with a temperature limiting device including a body which is provided with a bottom having ports for the separate inlet of hot and cold water and with an outlet port for hot, cold or mixed water, and containing a small fixed plate adjacent to said bottom and a small mobile plate provided with a cover plate so as to define a mixing chamber and adapted to take different positions with respect to the small fixed plate, said cover plate being connected to an actuating lever fulcrum supported on a rotatable fitting within a cylindrical portion which monolithically protrudes from said body, characterized in that it comprises a ring for limiting the maximum temperature of the delivered water, being connectable in an adjustable position to said cylindrical cartridge body portion, said ring being provided with a first projection adapted to abut against a tooth which monolithically protrudes from the rotatable fitting coming out from the cylindrical cartridge body portion and with a second projection adapted to abut at the same time against a surface of said rotatable fitting formed within said cylindrical portion.
